# EUROPEAN PATENT APPLICATION

(11) **EP 1 705 606 A1**
(43) Date of publication of application: **27.09.2006**
(21) Application number: 05006134.0
(22) Date of filing: 21.03.2005
(51) Int. Cl.: G06Q 10/00

(54) **Automatic bookkeeping system**

(71) Applicant: Lu, Li-Chih, Pan-Chiao, Taipei (TW)
(72) Inventor: Lu, Li-Chih, Pan-Chiao, Taipei (TW)
(74) Representative: Winter, Brandl, Fürniss, Hübner Röss, Kaiser, Polte Partnerschaft Patent- und Rechtsanwaltskanzlei

(57) **Abstract**

An computer system for automatic bookkeeping comprises: a user interface, comprising a plurality of bookkeeping data editing interface allowing user to input, revise and delete useful bookkeeping data; a bookkeeping database memory comprising a plurality of bookkeeping data files to record bookkeeping data; a chart and statement generating module provided with formats and definitions of a plurality of bookkeeping related chart and statement to automatically obtain needed data from said bookkeeping database memory and to generate bookkeeping related charts and statements using the obtained data according to format and definitions of particular chart or statement; a data file connection module to automatically connect a unit of input data to related bookkeeping data files according to features of said unit of input data to generate one or more unit of bookkeeping data; and an inference module, provided with a plurality of financial inference rules, to obtain data from said bookkeeping database memory and to operate according to particular inference rules using the obtained data. Charts and statements generated by the computer system for automatic bookkeeping include: journal, ledger, income statement, balance sheet and other financial statements.

## Description

### FIELD OF THE INVENTION

The present invention relates to a computer system for automatic bookkeeping, especially to a computer system that automatically generates charts and statements including bookkeeping data.

### BACKGROUND OF THE INVENTION

As the computer system has been widely used in the daily operation, bookkeeping systems including bookkeeping software that is executable in a computer system have been developed and made available to business and individual users. This bookkeeping software, when used in computer systems, allow user to input bookkeeping data, record the data into the respective categories they belong to and generate all kinds of bookkeeping, accounting or financial charts and statements, such as income statement, balance sheet, upon the request of the user. A computer system providing such automatic bookkeeping functions will be referred to as "bookkeeping system" hereinafter in this specification.

The conventional bookkeeping system is designed based on the theories, rules and practices generally accepted in the field of "accounting". In other words, when a unit of bookkeeping data is input, it is connected to the representing "code" (accounting code) of the "item" that the unit of data belongs, which code will then be used a basis of classification and calculation in the processing of the bookkeeping data. In such a system, the input, classification and utilization of the bookkeeping data shall strictly follow all the theories and regulations as accepted in the field of accounting. Data as input and processed can hardly be used for purposes other than generating bookkeeping, accounting or financial charts and statements.

To be more specific, the conventional bookkeeping system is designed to facilitate users to generate and edit financial statements. Format and content of all these charts and statements shall follow the commonly accepted, difficult to change, principles and regulations already established in the field of accounting or auditing. The conventional bookkeeping system is designed to allow users to easily input, edit and delete data to be filled into the readily specified columns or format of the desired charts and statements. Bookkeeping, accounting and financial charts and statements containing such data are generated to be read and studied by professionals who were trained to read these charts and statements. As a result, the purpose of the conventional bookkeeping system is to allow professional users to input, revise and delete data into or from charts and statements in specific formats; Information so generated is not for the use of ordinary people.

In addition, as the conventional bookkeeping system is designed to generate charts and statements, data to be included into different charts and statements are of different formats. Although the data represent the same "content" or "meaning" in the mind of the human being, they are not to be shared among systems that generate different charts and statements, since they might require data in different formats. One system is not allowed to utilize data designated to another system before an additional converting program is provided. Some accounting systems use the technology of the database system to allow bookkeeping data to be shared by different charts and statements. However, as described above, the purpose of the conventional system is to generate and edit desired charts and statements. Data that can be shared by the subsystems of an accounting or bookkeeping system can hardly be utilized by other systems, such as the personnel system, the financial system, the marketing system, the production system etc. Although some large scaled software systems provide solutions for converting data from system to system, these systems are large in scale, expensive and complicated. Development of such systems requires high costs and long time, which are not affordable to ordinary business units.

Nevertheless, the conventional bookkeeping system is designed for professionals. The bookkeeping and accounting operations in the conventional system, such as classification, connection, formulation, adjustment, correction and interpretation of information contained in the system, except calculation, are conducted by these professionals. Such a system is not an automatic bookkeeping system. Even the computer system is used, users of the conventional system play an important role in the rationalization of the accounts.

It is thus necessary to provide a novel computer system for automatic bookkeeping to allow input bookkeeping data to be shared by different chart and statement systems, without the need of complicated conversions.

It is also necessary to provide a computer system for automatic bookkeeping to allow ordinary users to conduct all kinds of bookkeeping operations and to automatically generate desired bookkeeping, accounting and financial charts and statements.

It is also necessary to provide a computer system for automatic bookkeeping that generates bookkeeping data useful in other systems.

It is also necessary to provide a computer system for automatic bookkeeping to automatically allocate in a bookkeeping database desired information to rationalize bookkeeping, accounting or financial accounts.

### OBJECTIVES OF THE INVENTION

The objective of the invention is to provide a novel computer system for automatic bookkeeping to allow input bookkeeping data to be shared by different chart and statement systems, without the need of complicated conversions.

Another objective of the invention is to provide a computer system for automatic bookkeeping to allow ordinary users to conduct all kinds of bookkeeping operations and to automatically generate desired bookkeeping, accounting and financial charts and statements.

Another objective of the invention is to provide a computer system for automatic bookkeeping that generates bookkeeping data useful in other systems.

Another objective of the invention is to provide a computer system for automatic bookkeeping to automatically allocate in bookkeeping database desired information to rationalize bookkeeping, accounting or financial accounts.

### SUMMARY OF THE INVENTION

According to this invention, a computer system for automatic bookkeeping is provided. The invented computer system for automatic bookkeeping comprises: a user interface, comprising a plurality of bookkeeping data editing interface allowing user to input, revise and delete useful bookkeeping data; a bookkeeping database memory, stored with a plurality of bookkeeping data files to record bookkeeping data; a chart and statement generating module provided with formats and definitions of a plurality of bookkeeping related chart and statement to automatically obtain needed data from said bookkeeping database memory and to generate bookkeeping related charts and statements using the obtained data according to format and definitions of particular chart or statement; a data file connection module to automatically connect a unit of input data to related bookkeeping data files according to features of said unit of input data to generate one or more unit of bookkeeping data; and an inference module, provided with a plurality of financial inference rules, to obtain data from said bookkeeping database and to operate according to particular inference rules using the obtained data. Charts and statements generated by the computer system for automatic bookkeeping include: journal, ledger, income statement, balance sheet and other financial statements.

The above and other objectives and advantages of this invention may be clearly understood from the detailed description by referring to the following drawings.

### BRIEF DESCRIPTION OF THE DRAWINGS

Fig. 1 illustrates the system diagram of the computer system for automatic bookkeeping of the invention.
Fig. 2a shoes the editing page for data regarding "Description" of purchased operational assets, used in one embodiment of this invention.
Fig. 2b shows the editing page for data regarding "Closing" of purchased operational assets, used in the embodiment of Fig. 2a.
Fig. 2c shows the editing page for data regarding "Payment" of purchased operational assets, used in the embodiment of Fig. 2a.
Fig. 3 shows a sample "Operational Assets" chart applicable in the computer system for automatic bookkeeping of this invention.
Fig. 4 shows the first page of a sample "Details of Asset" chart applicable in the computer system for automatic bookkeeping of this invention.

Table I shows the classification system of bookkeeping data of the computer system for automatic bookkeeping of this invention.

Table II shows a part of the financial statement connection table, in category "Assets", used in one embodiment of the present invention.

Table III shows part of the "Income Book Connection Table", used as one book connection table in this invention.

Table IV shows several formulas for the calculation of analytic elements in financial analysis, pertaining to "Capital Structure", applicable in the computer system for automatic bookkeeping of this invention.

### DETAILED DESCRIPTION OF THE INVENTION

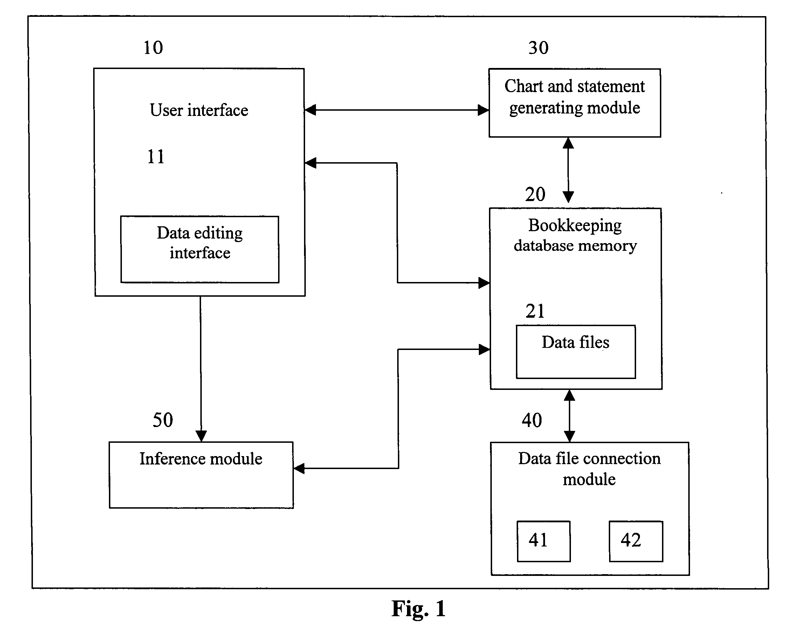

Fig. 1 illustrates the system diagram of the computer system for automatic bookkeeping of the invention. As shown in this figure, the computer system for automatic bookkeeping comprises: a user interface 10, comprising a plurality of bookkeeping data editing interface 11 allowing user to input, revise and delete useful bookkeeping data; a bookkeeping database memory 20, stored with a plurality of bookkeeping data files to record bookkeeping data; a chart and statement generating module 30 provided with formats and definitions of a plurality of bookkeeping related chart and statement to automatically obtain needed data from said bookkeeping database memory 20 and to generate bookkeeping related charts and statements using the obtained data according to format and definitions of particular chart or statement; a data file connection module 40 to automatically connect a unit of input data to related bookkeeping data files according to features of said unit of input data to generate one or more unit of bookkeeping data; and an inference module 50, provided with a plurality of financial inference rules, to obtain data from said bookkeeping database memory 20 and to operate according to particular inference rules using the obtained data. Charts and statements generated by the computer system for automatic bookkeeping include: journal, ledger, income statement, balance sheet and other financial statements.

The computer system for automatic bookkeeping of this invention is designed under the basis of a bookkeeping data classification system which is similar to the classification system of the balance sheet as used in many accounting applications. Table I shows the bookkeeping data classification system to be used in the computer system for automatic bookkeeping of this invention. As shown in this Table, bookkeeping data that have similar features in the bookkeeping processing are defined as one item (class). As a result, bookkeeping data that belong to the same item or class require similar processing in the computer system for automatic bookkeeping of this invention. Bookkeeping data belonging to different item or class may require different processing in the computer system for automatic bookkeeping of this invention. Of course, other classification system that classifies bookkeeping data according to features in the bookkeeping processing may also be used in this invention.

Based on the above-described classification system, the user interface 10 of this invention includes a plurality of data editing interfaces or data editing pages 11, each basically corresponding to one class or item of the classification system. In the bookkeeping database memory 20, basically one data file format is given to define or describe data belonging to the same class or item. A unit of bookkeeping data is stored in the data file 21 that includes format information for the unit of data, in correspondence with the related data format.

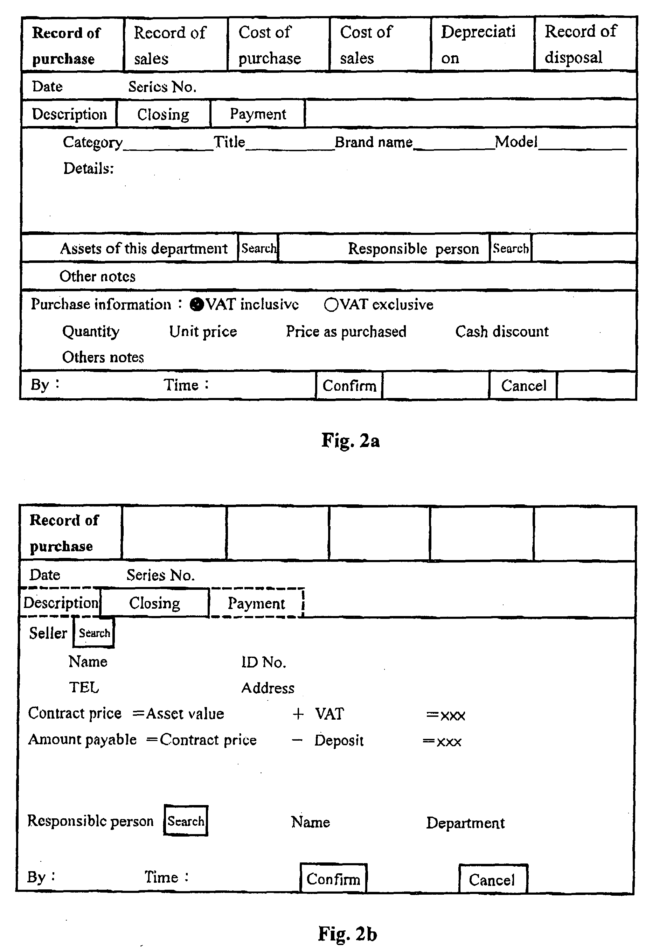

Editing interface or editing pages for the bookkeeping data are designed to allow users to input, revise and delete bookkeeping data in the related data file. To illustrate the editing interface or editing pages of the user interface 10, the editing pages for transaction records of operational assets will be shown as an example. Fig. 2a shows the editing page for data regarding "Description" of purchased operational assets, used in one embodiment of this invention. As shown, the editing page for the transaction record of operational assets is divided into six categories, "Record of purchase", "Record of sales", "Cost of purchase", "Cost of sales", "Depreciation" and "Record of disposal". The "Record of purchase" category is divided into three editing pages. They are "Description", "Closing" and "Payment". The "Description" page provides blanks relating to features of an operational asset and is the default page. Users may input, revise or delete desired data in the editing page. The purpose of this editing page is to allow the user to establish description of operational assets as purchased.

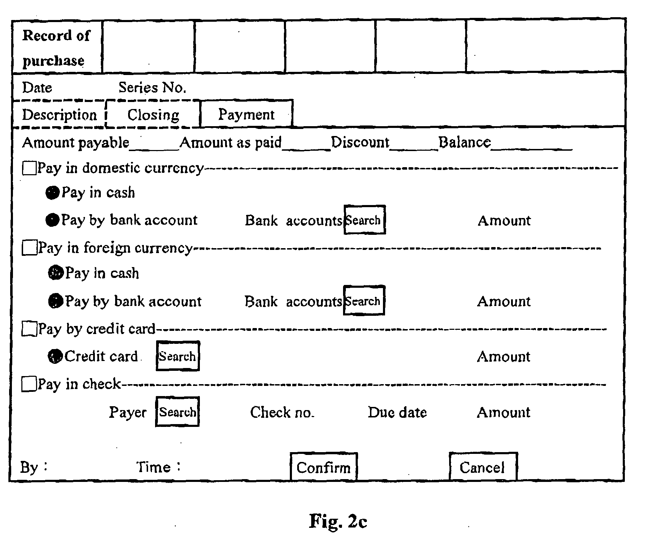

Fig. 2b shows the next editing page following page "Description", page for data regarding "Closing" of purchased operational assets. This editing page allows users to edit data relating to transactional conditions of the purchased operational assets. Fig. 2c shows the editing page for data regarding "Payment" for purchased operational assets. This page allows users to edit data regarding details of payment for the purchased operational assets. All kind of necessary or useful information to describe details of a transaction and the asset may be input, revised and deleted from the editing page. Of course, these figures are only for illustration purposes. Any editing page that allows users to edit useful information regarding the transaction of an asset may be used in this invention.

The page arrangement, pagination, column arrangement, format and content of editing pages of other items, categories or classes, may be easily understood by those skilled in the art by referring to the above illustration. Detailed description thereof is thus omitted.

The computer system for automatic bookkeeping of this invention provides a data file connecting module 40 to connect input bookkeeping data to one or more units of data belonging to other data files. For example, when data regarding a purchased asset are established, the data are stored in a data file belonging to the category of "Assets". At the same time, the data file connecting module 40 automatically creates a unit of data to include the input data in the data file belonging to the category of "account payable", "notes payable" or "cash" and another unit of data to include the input data in the data file belonging to the category of "value-added tax" or "consumer tax" or "sales tax". As a result, in item "account payable", "notes payable" or "cash", a transaction is recorded and the account may be adjusted accordingly. At the same time, in item "value-added tax", a new record will be added to adjust the amount of tax payable.

Database provided in the bookkeeping database 20, as established above, includes data files corresponding to all the categories or items as shown in Figs. 2A-2C, respectively. Every data file includes numerous units of bookkeeping data. Data belonging to a data file are recorded according to specific formats.

Taking the "operational asset" for example, every transaction record of a operational asset will include a purchase record, a sales record, cost of purchase record, cost of sales record, depreciation record and disposal record, as the case may be.

Among them, in the purchase record, information as recorded may include: description of asset, details of transaction, description of seller, conditions of transaction, history and method of payment etc. In the sales record, information as recorded may include: description of asset, details of transaction, description of buyer, conditions of transaction, history and method of payment collection etc. Similar arrangements are made to other records of operational assets.

Data files belonging to other categories or items include desired data in desired format. Content and format of such data are designed according to features of processing data in the respective categories or items.

In the computer system for automatic bookkeeping of this invention, a chart and statement generating module 30 is provided to generate all kinds of desired charts and statements, including: daily journal, ledger, income statement, balance sheet and other financial statements. In the chart and statement generating module 30 provided are sample charts and statements which format, columns, content of data and calculation and inference regulations are already defined. When an instruction from the user is received by the system, template of the desired statement is picked up and the columns in the statement are filled with data obtained from the bookkeeping database memory 20 or with results of calculation or inference using data in memory 20. A desired chart or statement is so generated.

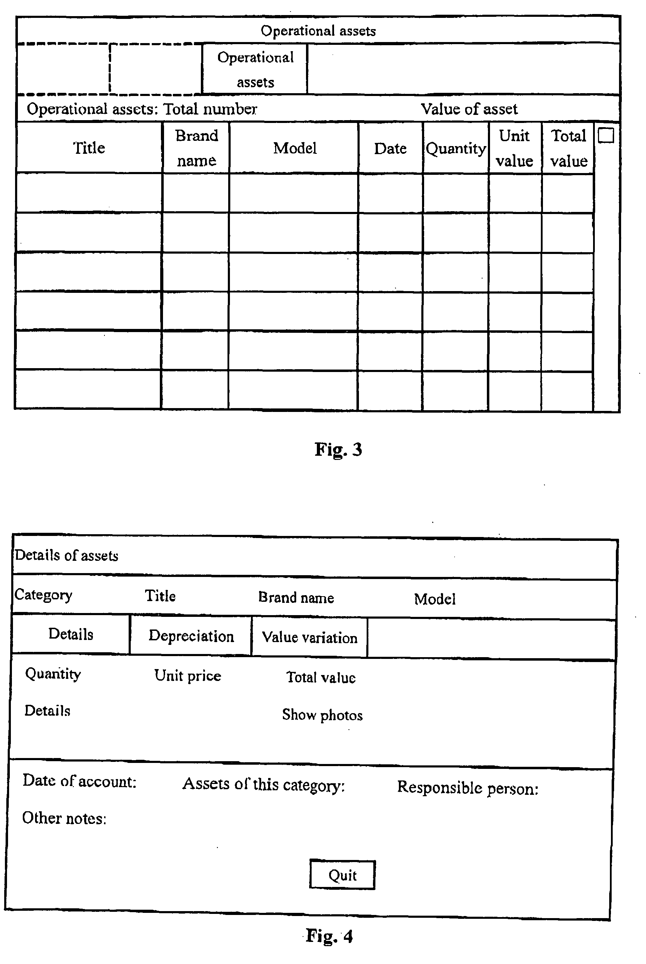

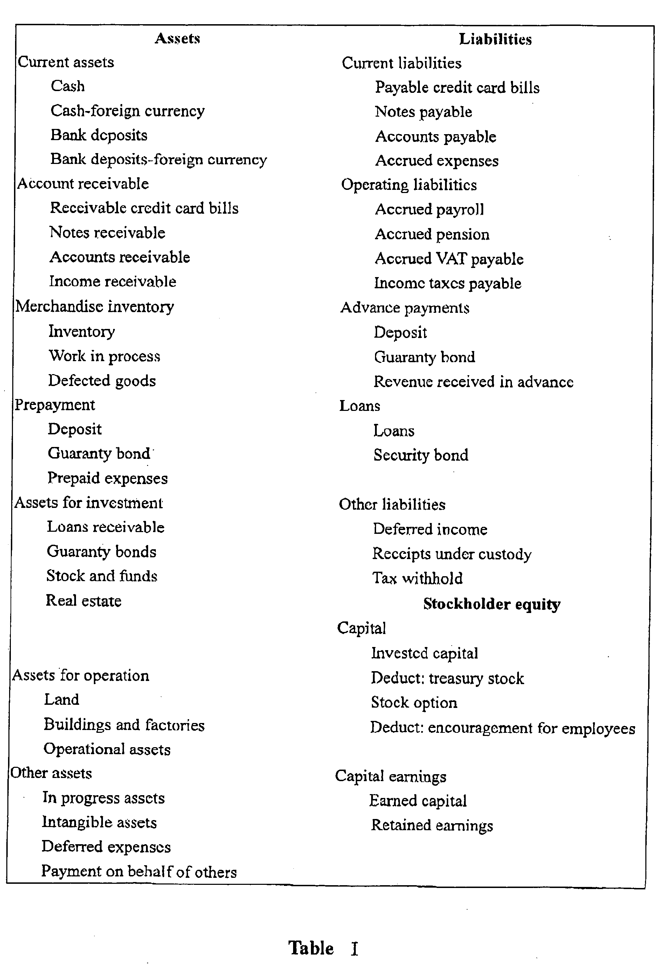

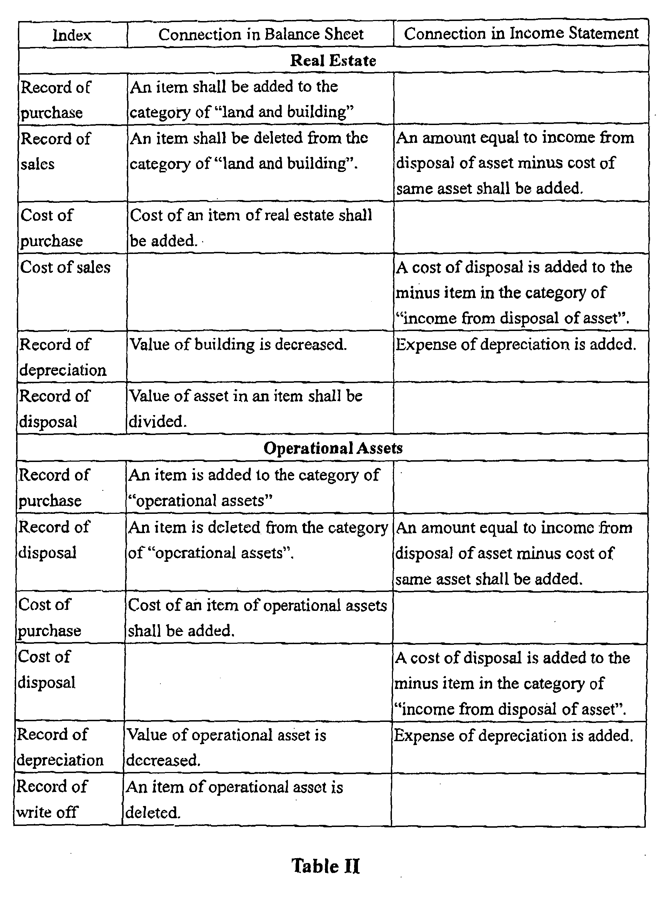

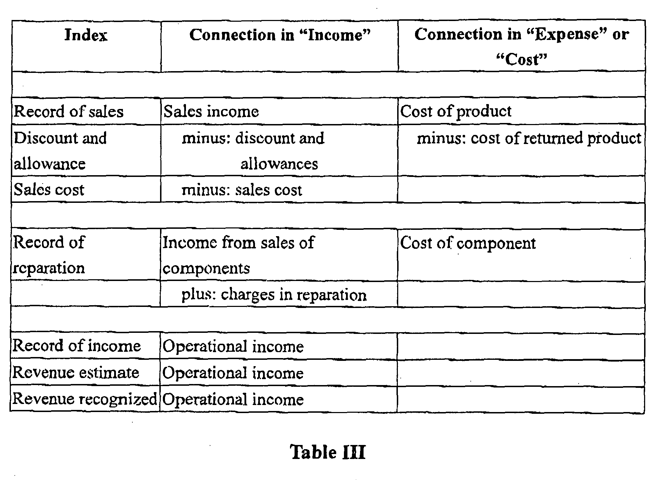

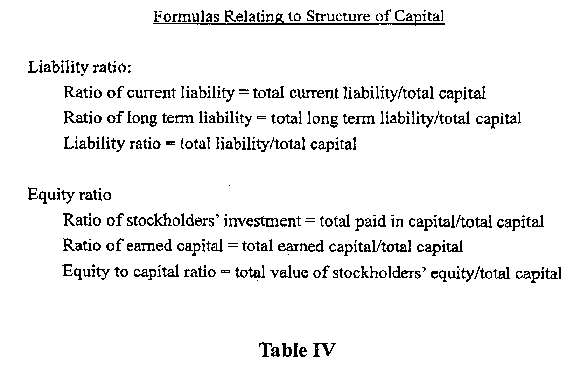

Fig. 3 shows a sample "Operational Assets" chart applicable in the computer system for automatic bookkeeping of this invention. As shown in this figure, the sample "Operational Assets" chart belongs to category "Fixed Assets" chart in the "Ledger" file. Three sample charts are provided under the category "Fixed Assets". They are: land, building and factory, and operational assets. In the "Operational Assets" chart of Fig. 4, detailed information specifying an asset which may be obtained from the bookkeeping database memory 20 may be shown and includes columns of: category of asset, title of asset, brand name, date of account, quantity, unit price, value etc. At top of the chart shown are total number and value of assets which figures are calculated using data to be filled into the above-said columns. A button is provided inside the chart, labeled as "Details". When the user clicks on this button, details of the desired asset are called out from the bookkeeping database memory 20 and shown in the user interface 10. Fig. 4 shows the first page of a sample "Details of Asset" chart that may be displayed when the "Details" button is clicked. Details of the desired asset are shown in the respective columns of the chart. In the following page(s), information such as variation of value and other historic information of the same asset may be shown.

Figs. 3 and 4 illustrate how a ledger may be generated by the computer system for automatic bookkeeping of this invention. Other charts and statements may be generated in a same or similar way. For example, when a balance sheet is to be generated, the chart and statement generating module 30 obtains data that are labeled as "current information" from related data files in the bookkeeping database memory 20. The data are used as basis of calculation and inference so that desired data and figures are obtained and displayed in their corresponding columns. Since the computer system for automatic bookkeeping of this invention provides correct classification of bookkeeping data and defines correct connection relations between or among data files, desired charts and statements are easily generated and contents of the charts and statements are correct, without the need of manual adjustments.

In addition, bookkeeping data stored in the bookkeeping database memory of this invention have explicit and precise definitions in their format, column and content. Such data may be utilized by a plurality of systems, without the need of reinstallation or additional converting programs. This goal is achieved by, among others, using a classification system that exhaustedly defines all bookkeeping activities of an enterprise or a business unit. To generate such an effect, to forbid users from altering the classification system is highly recommended.

In the connection of the bookkeeping data, the data file connection module 40 of this invention uses a plurality of look-up-tables to define necessary and correct connections between or among data files. The look-up-tables include at least one financial statement connection table 41 and a book connection table 42. The financial statement connection table 41 defines inference relations between columns of data in respective data files that correspond with related categories or items and columns of respective financial statements such as the balance sheet, income statement etc. The book connection table 42 on the other hand defines the connections between columns of data in respective data files that correspond with related categories or items and columns of respective accounting books. As the connections are so defined, correct charts and statements and books may be easily generated after calculation or inference using data in the connected columns.

Table II shows a part of the financial statement connection table, in category "Assets", used in one embodiment of the present invention. Some inference relations between the related columns of an asset data file and the corresponding columns in the balance sheet and the income statement are shown. Table III shows part of the "Income Book Connection Table", used as one book connection table in this invention. Some connections between columns of data files in the bookkeeping database memory 20 and particular income items and expense items or cost items in a profit and loss account. Those skilled in the art may easily understand the connection or inference relations between or among other columns of data in the related data files and columns in other books, charts or statements by referring to the above illustration.

The computer system for automatic bookkeeping of this invention further provides an inference module 50. The inference module 50 includes a plurality of inference formulas and conducts inference using data from the bookkeeping database memory 20 according to desired inference formulas. The inference module 50 is particularly useful in the generation of analytic elements in financial analysis. Table IV shows several formulas for the calculation of analytic elements in financial analysis, pertaining to "capital structure", as it is applicable in the computer system for automatic bookkeeping of this invention. Other formulas regarding analytic elements pertaining to other factor in financial analysis may also be provided in the inference module 50. As a result, when the user clicks on the user interface 10, required information may be easily generated.

As the present invention has been shown and described with reference to preferred embodiments thereof, those skilled in the art will recognize that the above and other changes may be made therein without departing form the spirit and scope of the invention.

## Claims

1. A computer system for automatic bookkeeping to accept, store and revise bookkeeping data and to generate bookkeeping, account or financial charts and statements, comprising:
a user interface, comprising a plurality of bookkeeping data editing interface allowing user to input, revise and delete useful bookkeeping data;
a bookkeeping database memory, comprising a plurality of bookkeeping data files to record bookkeeping data;
a chart and statement generating module provided with formats and definitions of a plurality of bookkeeping related chart and statement to automatically obtain needed data from said bookkeeping database memory and to generate bookkeeping related charts and statements using the obtained data according to format and definitions of particular chart or statement; and
a data file connection module to automatically connect a unit of input data to related bookkeeping data files according to features of said unit of input data to generate one or more unit of bookkeeping data.

2. The computer system for automatic bookkeeping according to claim 1 wherein said bookkeeping database memory contains definitions of columns and format of data belonging to respective data files in said bookkeeping database memory in accordance with features of such data in bookkeeping related processing of such data and said user interface provides input pages corresponding to said defined columns and formats..

3. The computer system for automatic bookkeeping according to claim 1, wherein said chart and statement generating module comprises a plurality of template charts and statements, wherein related columns, data formats and calculation and inference formulas are defined.

4. The computer system for automatic bookkeeping according to claim 1, wherein said data file connection module comprises:
a financial statement connection table to define inference relations between columns of data in respective data files that correspond with related categories or items and columns of respective financial statements; and
a book connection table to define the connections between columns of data in respective data files that correspond with related categories or items and columns of respective accounting books.

5. The computer system for automatic bookkeeping according to claim 1, further comprising an inference module provided with a plurality of financial inference formulas, to conduct inference of data from said bookkeeping database memory according to particular inference formulas.

6. The computer system for automatic bookkeeping according to claim 5, wherein said financial inference formulas comprise inference formulas for analytic elements in financial analysis.
